# EUROPEAN PATENT SPECIFICATION

(11) **EP 3 150 484 B1**
(45) Date of publication and mention of the grant of the patent: **12.12.2018**
(21) Application number: 15382472.7
(22) Date of filing: 29.09.2015
(51) Int. Cl.: B64C 3/18, B64C 3/20, B32B 38/10, B32B 38/18, B64F 5/00

(54) **COMPOSITE RIB FOR AN AIRCRAFT TORSION BOX AND MANUFACTURING METHOD THEREOF**
VERBUNDRIPPE FÜR EINEN TORSIONSKASTEN EINES LUFTFAHRZEUGS UND HERSTELLUNGSVERFAHREN DAFÜR
NERVURE COMPOSITE POUR UN CAISSON DE TORSION D'UN AÉRONEF ET SON PROCÉDÉ DE FABRICATION

(43) Date of publication of application: 05.04.2017
(73) Proprietor: Airbus Operations, S.L., 28906 Getafe (Madrid) (ES)
(72) Inventor: GARCÍA NIETO, Carlos, 28906 GETAFE (Madrid) (ES); VELEZ DE MENDIZABAL ALONSO, Iker, 28906 GETAFE (Madrid) (ES); GUINALDO FERNANDEZ, Enrique, 28906 GETAFE (Madrid) (ES); CRESPO PEÑA, Soledad, 28906 GETAFE (Madrid) (ES)
(74) Representative: Carpintero Lopez, Francisco

(56) References cited:
- EP-A1- 2 851 283
- EP-A1- 2 889 214
- EP-A1- 2 910 365
- WO-A1-2014/065719
- US-A1- 2008 245 928

## Description

### Object of the invention

The present invention refers to the configuration and manufacturing process of a rib for the construction of a torsion box for an aircraft wings, vertical tail planes (VTP) or horizontal tail planes (HTP).

An object of the invention is to provide a torsion box rib which can be obtained as an unitary body integrating all its components, such as its weight, assembly time and cost of the rib are minimized.

Another object of the invention is a manufacturing process based on composite material, which allows the manufacture of torsion ribs in one-shot process, that is, with only one curing cycle

### Background of the invention

Typically a multi-rib torsion box is formed by front and rear spars and a plurality of ribs transversally arranged and fitted to the front and rear spars, such as to form together a box-like configuration. Other components for example of a HTP, like leading and trailing edges, and upper and lower skin panels internally reinforced by stringers are fitted to the torsion box. Commonly, all these components are manufactured with composite materials, such as Carbon Fiber Reinforced Plastic (CFRP).

The main functions of the ribs are: to provide torsional stiffness, longitudinally limiting the skins and the stringers so as to discretize buckling loads, maintaining the shape of the aerodynamic surface and supporting local load introductions resulting from actuator fittings, support bearings and similar devices which are directly secured to the front and rear spars.

Typical configurations for torsion boxes ribs are: C-shaped ribs, L-shaped ribs, Flat web ribs, Double C-shaped ribs, and Truss ribs.

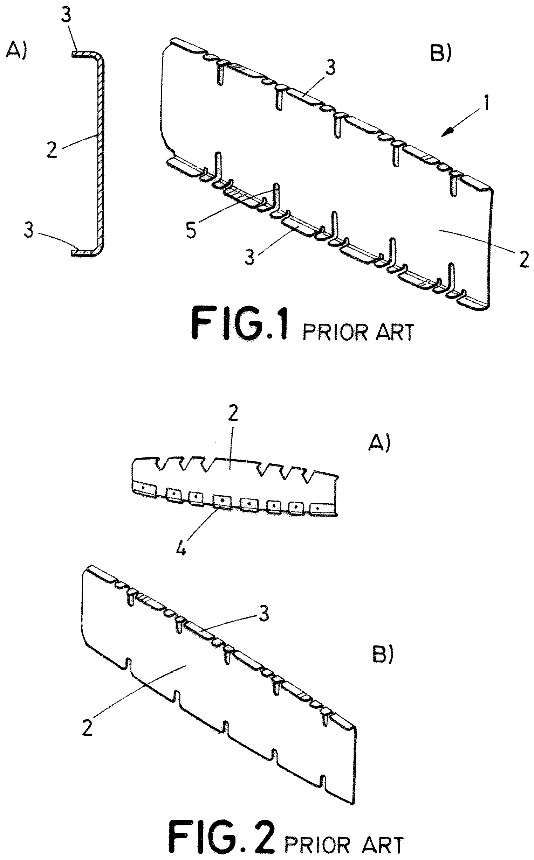

Figure 1 shows a C-shaped rib (1) which consists of a C-section one piece rib having a web (2) and flanges (3) both in its upper and lower edges. This C-shaped rib (1) is joined to the skins through its flanges (3), and it is joined to spars by means of additional components such as brackets (not shown). The rib (1) is provided with a plurality of "mouse" holes (5) to receive the stringers of the upper and lower covers.

Figure 2 shows a L-shaped rib which consist of an L-section one piece rib having a web (2) and flanges (3) only in one of its upper and lower edges. This L-shaped rib is joined to one skin through its flange (3), and it is fixed to the other skin using brackets (4). The rib is joined to the spars also with brackets.

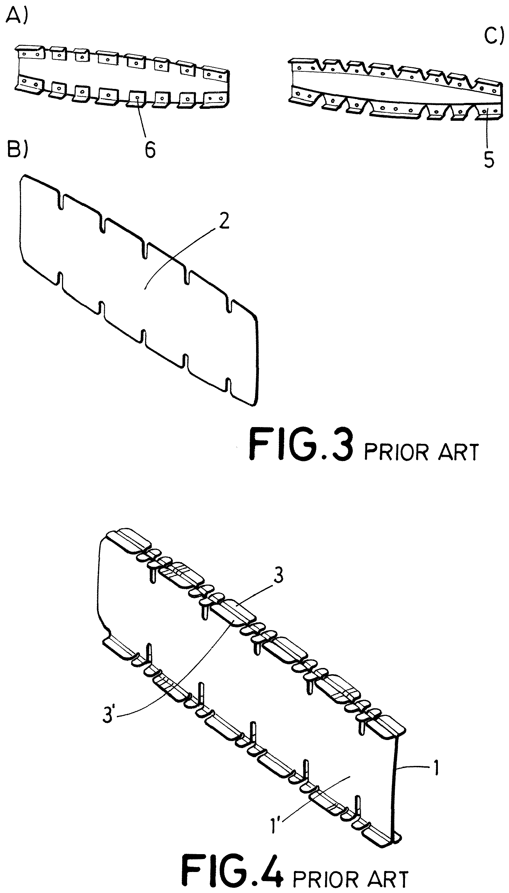

Figure 3 shows a flat web rib consisting of a flat web (2) without flanges. The rib is fixed to the skins by means of angles or T-profiles, or via continuous flanges (6) (so called formers). The rib (1) is joined to the spars via brackets (5).

Figure 4 shows a double C-shaped rib which is obtained by coupling web to web two C-shaped sections (1,1') together. The attachment of this type of rib to the skins is carried out by the integrated flanges (3,3'). The rib is joined to the spars via brackets (not shown).

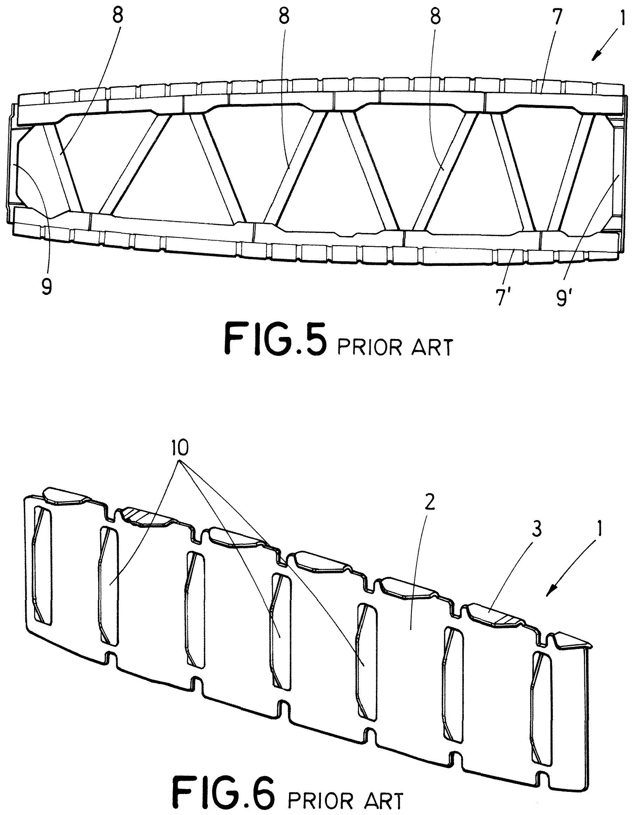

Figure 5 shows a truss rib which comprises upper and lower formers (7,7'), and several diagonal struts (8) and front and rear T-shaped profiles (9,9'), joining the formers by means of mechanical joints (typically bolted or riveted). The struts are made of CFRP, and the formers are CFRP or metallic. It can be noted in the figure the complexity of this type of rib which requires a large number of fastened joints.

Additionally, different rib web configurations such as multi-stiffened flat webs, or hole-lightened webs, can be used any of the previously described ribs of figures 1 to 5.

Figure 6 shows a multi-stiffened web configuration which consists of a web (2) reinforced with vertical stiffeners (10) on its flat surface. The web allows a variable thickness sizing, and the stiffeners are manufactured separately and then bonded or riveted to the web (2).

Figure 7 shows a hole-lightened rib web configuration which consists of a web (2) with joggled flanged lightening holes (11). The flat web can be reinforced if necessary with vertical stiffeners (10) (figure 7B) between each two holes. This configuration allows also different web thicknesses between each two stiffeners.

As it can be noted, the classical configuration of prior art ribs include different components that have to be manufactured separately and then assembled together, such as current manufacturing process are time consuming and expensive.

The European patent application EP-2910365 (A1) relates to a composite structural element comprising a rib or spar configured as unitary members, by conforming a single pre-form of stacked plies.

### Summary of the invention

The present invention is defined in the attached independent claims, and overcomes the above-mentioned drawbacks of the prior art, by providing a torsion box rib design which allows a manufacturing process as an unitary body integrating all its elements such as lattice structure and flanges, can be manufactured from a single CFRP pre-form in one-shot.

Therefore, an aspect of the invention refers a composite rib, obtained as an unitary body by conforming a single pre-form of stacked plies. The rib comprises an outer frame of substantially rectangular configuration having an outer frame contour and an internal frame contour, the outer frame contour having flanges such as the rib has preferably a C-shaped a I-shaped or flat cross-sectional shape.

According to the invention, the rib further comprises a plurality of diagonal truss forming a zigzag pattern within the area defined by the internal frame contour, the rib further comprising flanges at opposite sides of the truss, and flanges at the internal frame contour.

The rib of the invention can be manufactured in one-shot (only one curing cycle) as an unitary piece, integrating all the elements of the rib such as truss, rib feet and spars interface flanges, and truss stabilization flanges as parts of the same unitary piece.

Unlike the prior art, all the elements of the rib of the invention are obtained in the same manufacturing process, such the manufacture and assembly of ancillary components is avoided. Also, for fixing the rib to the spars and stringers of a torsion box, there is no need to provide brackets or similar components.

Another aspect of the invention refers to a method for manufacturing a composite rib for a torsion box, wherein first a flat stack of plies is formed, by laying up a plurality of plies of composite material on a flat surface. This flat stack of plies is then cut to form a flat pre-form with a predefined configuration which includes an outer contour configuring a battlement pattern defining flanges.

In this cutting process an internal contour is also formed within the area defined by the outer contour, such as this internal contour configure two or more diagonal truss in the form of strips, and flanges at opposite sides of each truss.

At that stage, the flanges of the outer and internal contours are flat and co-planar with the rest of the pre-form. At a subsequent process step, the flat pre-form is press-formed to fold the flanges of the outer and internal contour to form a rib pre-form.

Finally the piece is cured and trimmed as separate piece, and then co-bonded or riveted to other components of a torsion box. Alternatively the piece is co-cured with other components of a torsion box.

### Brief description of the drawings

Preferred embodiments of the invention, are henceforth described with reference to the accompanying drawings, wherein:
Figure 1.- shows a C-shaped rib of the prior art, wherein drawing (A) is a cross-sectional view, and drawing (B) is a perspective view.
Figure 2.- shows a L-shaped rib of the prior art, wherein drawing (A) perspective view, and drawing (B) is a perspective view of the rib with brackets.
Figure 3.- shows flat web rib of the prior art, wherein drawing (B) is a perspective view of the rib, drawing (A) perspective view of the rib with angles or T-profiles, and drawing (C) is a perspective view of the rib with brackets.
Figure 4.- shows a perspective view of a double C-shaped rib of the prior art.
Figure 5.- shows a perspective view of a truss ribs of the prior art.
Figure 6.- shows a perspective view of a multi-stiffened web L-Shaped rib of the prior art..

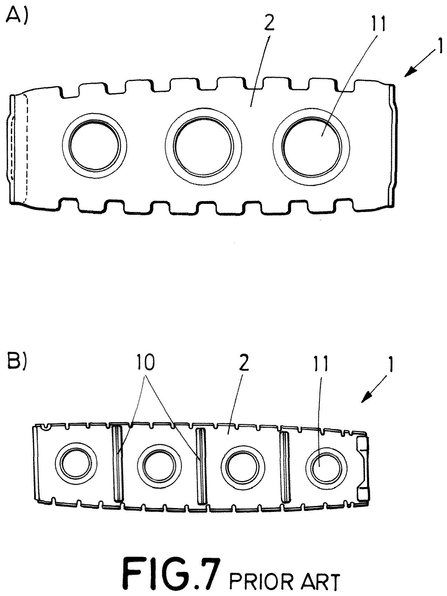

Figure 7.- shows a hole-lightened rib configuration, wherein drawing A is a rib without stiffeners , and drawing B is a rib with stiffeners.

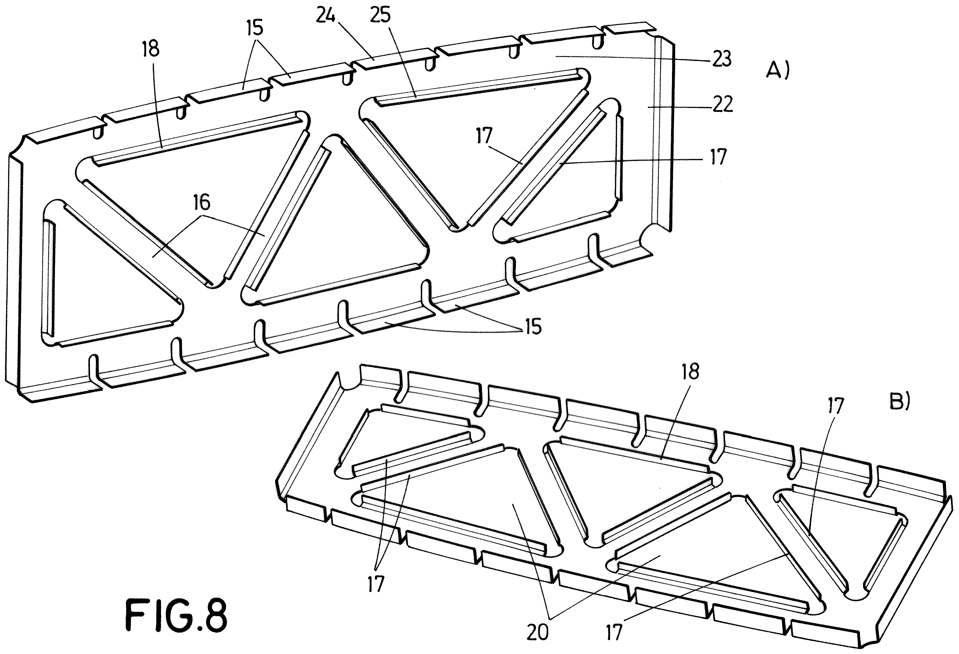

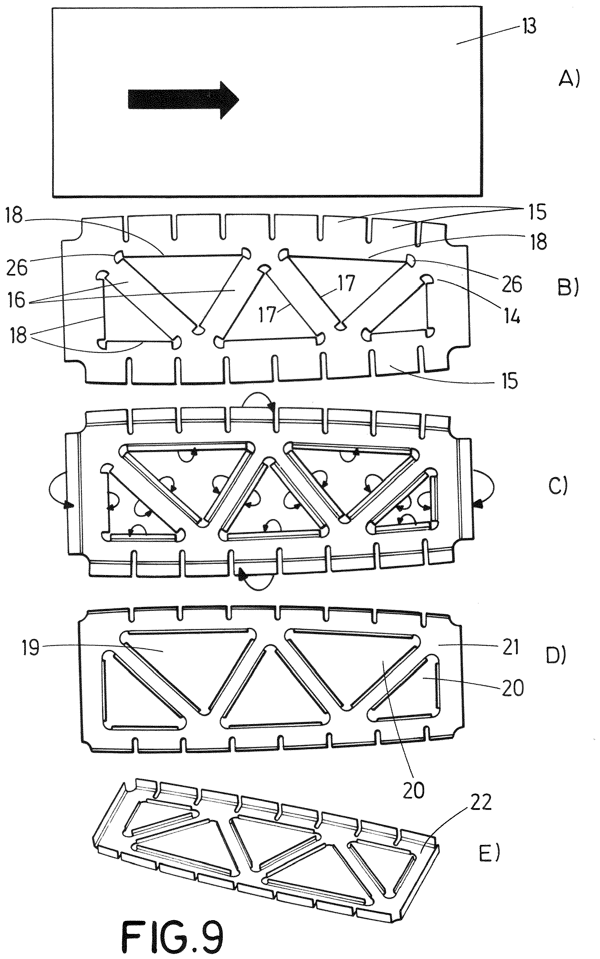

Figure 8.- shows two perspective views from different angles (drawings A & B) of a torsion box rib according to the invention obtained by the method or process shown in figure 9, wherein it is shown that the profile of the rib (cut A-A') can be C-shaped or I-shaped is two symmetrical pre-forms are used.
Figure 9.- shows schematically the rib manufacturing method of the invention, in a sequential order from top to bottom, wherein drawing A illustrates the composite plies flat lay-up, drawing B illustrates the flat pre-form cutting, drawing C illustrates the flat pre-form pres-forming, drawing D illustrates the curing and trimming final process, and drawing E illustrates a terminated rib. The arrows in drawing 9C indicate the folding movement of the flanges.

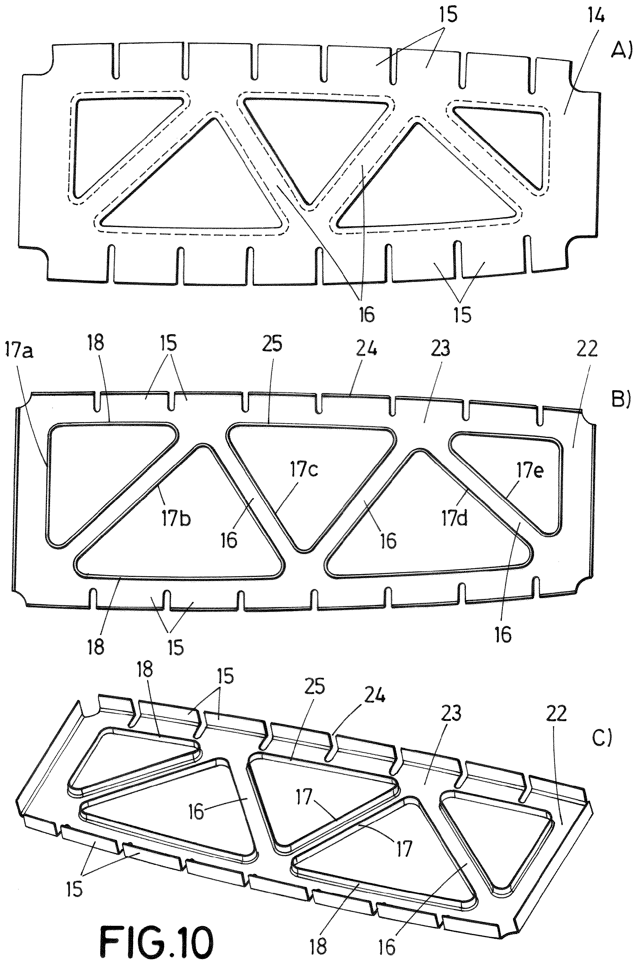

Figure 10.- shows another preferred embodiment of the rib of the invention, wherein drawing A is top plan view of the flat-pre-form, drawing B is a front elevational view of the conformed pre-form of drawing A, and drawing C is a perspective view of the same rib. In drawing 10A, the broken lines indicate the areas that will be folded during the press-forming process, to form continuous flanges.

### Preferred embodiment of the invention

Figure 8 shows a preferred embodiment of a composite rib (22) for a torsion box, wherein the rib (22) has been obtained as an unitary body by conforming a single pre-form of stacked plies (14) according the manufacturing method of the invention.

The rib (22) of that example comprises an outer frame (23) of substantially rectangular configuration having an outer frame contour (24) and an internal frame contour (25), the outer frame contour (24) having flanges (15) such as the rib has a C-shaped cross-sectional shape. The rib (22) further comprises a plurality of diagonal truss (16) forming a zigzag pattern within the area defined by the internal frame contour (25), and flanges (17) at opposite sides of the truss (16), and flanges (18) at the internal frame contour (25).

This rib configuration integrates all of its elements, such as it can be assembled directly in a torsion box being constructed, without brackets or any other ancillary elements. The rib (22) can be co-cured with the torsion box components (if all components are pre-preg), or co-bonded (in a hard/wet pre-preg preparation or in RTM/wet pre-preg). The rib could also be assembled by traditional means such as riveting.

In other preferred embodiments of the invention, the rib may have a flat profile, or a I-shaped cross-sectional shape, and configured with holes instead of truss.

Figure 9 illustrates the sequence of steps of the manufacturing method of the invention, wherein first several plies of composite material (preferably CFRP) are layered up on a flat surface, for example by means of an ATL machine, to form a substantially flat stack of plies (13) (drawing 9A). The thickness of the stack of plies (13) no need to be constant, but thickness transitions can be formed during the lay up.

At a subsequent manufacturing step (drawing 9B), some areas of the flat stack of plies (13) are cut out from the stack of plies (13) to form a flat pre-form (14) having an outer contour (15) configuring a battlement pattern with flat flanges (15), and an internal contour within the area defined by the outer contour, the internal contour configuring two or more diagonal truss (16), and flat flanges (17) at opposite sides of the truss (16). Additional flanges (18) are formed in this flat pre-form (14) at the internal frame contour (25).

In this preferred embodiment of the invention, for conforming the flat flanges (17), some cut-outs (26) are formed at the corners between two consecutive truss (16), such as the flat flanges (17) are obtained as individual straight segments and they can be easily folded at a subsequent step.

The flat pre-form (14) is then press-formed (drawing 9C) to fold all the flanges of the outer and internal contours (15,17,18) to form a rib pre-form (21) (drawing 9D).

The rib pre-form (21) is then cured and trimmed, such a finished rib (22) (drawing 9E) is obtained in only one curing cycle and as a unitary body integrating all the elements of the rib (frame, flanges, truss, etc.), such as it can be attached directly to other elements of a torsion box, such as skin covers stringers and front and rear spars.

The external contour is generally rectangular having two large opposing sides and two short opposing sides. As illustrated in figure 9C, the flanges (15,17,18) are folded toward the same side of the rib, until they are placed at an orthogonal position with respect to the plane defined by the rib, such as the rib has a C-shaped cross-sectional shape.

As it can be noted in figure 9, the internal contour configure diagonal truss (16) forming a zigzag pattern (19), and triangular openings (20) in the flat pre-form (14) with flanges (18) at the sides of each triangular opening (20).

In the alternative embodiment of figure 10, there are no cut-outs (26), and the flat flanges (17), instead of being individual straight segments, are formed as continuous flanges (17a -,17e) with a triangular configuration in the case of figure 10, or any other suitable configuration as circular for example. The continuous flanges (17a -,17e) are also folded in a press-forming process using proper conforming tooling. Since there are no cut-outs (26), the cutting process is simplified.

Based on specific rib loads and requirements for each particular application, thicknesses transitions, truss-shaped rib web geometrical arrangement, and internal flanges width can be optimized.

By predefining an internal configuration with standard shaped truss-lattice holes, this rib manufacturing process of the invention could also allow interchangeable tooling parts, thus, reducing even more the manufacturing cost and time of a given aircraft ribs set.

Other preferred embodiments of the present invention are described in the appended dependent claims and the multiple combinations thereof.

## Claims

1. A composite rib (22) for a torsion box, wherein the rib (22) has been obtained as an unitary body by conforming a single flat pre-form (14) of stacked plies
wherein the rib (22) comprises an outer frame (23) of substantially rectangular configuration having an outer frame contour (24) and an internal frame contour (25), the outer frame contour (24) having flanges (15),
**characterised in that** the rib (22) further comprises a plurality of diagonal truss (16) forming a zigzag pattern within the area defined by the internal frame contour (25), the rib (22) further comprising flanges (17) at opposite sides of the truss (16), and flanges (18) at the internal frame contour (25),
and wherein the step of conforming the single flat pre-form (14) of stacked plies comprises press-forming the flat pre-form (14) to fold the flanges (15,17,18) of the outer and internal contours (24,25) to form the rib pre-form, and curing the rib pre-form.

2. Composite rib according to claim 1 wherein the flanges (15) of the outer contour (24) are arranged such as the rib (22) has a flat, C-shaped, or I-shaped cross-sectional shape.

3. Composite rib according to claim 1, wherein the flanges (17) at opposite sides of the truss (16), are individual straight segments.

4. Composite rib according to claim 1, wherein the flanges (17) at opposite sides of the truss (16) are part of a continuous flange.

5. Method for manufacturing the composite rib (22) for a torsion box defined in the previous claims 1 to 4, the method comprising the steps of:
laying up a plurality of plies of composite material to form a substantially flat stack (14) of plies,
cutting the stack of plies (14) to form a flat pre-form having an outer contour (24) configuring flanges (15), and an internal contour (25) within the area defined by the outer contour (24), the internal contour (25) configuring two or more truss (16), and flanges (17) at opposite sides of the truss (16),
press-forming the flat pre-form (16) to fold the flanges (15,18) of the outer and internal contours (24,25) to form a rib pre-form,
and curing the rib pre-form.

6. Method according to claim 5 wherein the internal contour (25) configure diagonal truss (16) forming a zigzag pattern, and openings (20) in the flat pre-form with flanges in the sides of each opening (20).

7. Method according to claim 5 wherein the openings (20) are triangular or circular.

8. Method according to claim 5 or 6 wherein the outer contour (24) is generally rectangular having two large opposing sides and two short opposing sides, and wherein the flanges (15) are folded towards the same side of the rib such as the rib has a C-shaped cross-sectional shape.

9. Method according to any of the claims 5 to 8, wherein plies are dry plies and the rib pre-form is cured in a Resin Transfer Molding (RTM) process.

10. Method according to any of the claims 5to 8, wherein the plies are resin preimpregnated plies.

11. Method according to claim 5 further comprising the step of forming two symmetrical C-shaped rib pre-forms, arranging the two C-shaped rib pre-forms together as to form an I-shaped rib pre-forms, and curing to the two C-shaped rib pre-forms together.

## Patentansprüche

1. Verbundrippe (22) für einen Torsionskasten, wobei die Rippe (22) als ein einstückiger Körper erhalten worden ist, indem ein einzelner flacher Vorformling (14) von geschichteten Lagen geformt wird,
wobei die Rippe (22) einen Außenrahmen (23) von im Wesentlichen rechteckiger Form umfasst, der eine Außenrahmenkontur (24) und eine Innenrahmenkontur (25) hat, wobei die Außenrahmenkontur (24) Flansche (15) hat, **dadurch gekennzeichnet, dass**
die Rippe (22) ferner eine Vielzahl diagonaler Streben (16) umfasst, die in dem durch die Innenrahmenkontur (25) festgelegten Bereich ein Zickzackmuster bilden, wobei die Rippe (22) ferner Flansche (17) an gegenüberliegenden Seiten der Strebe (16) und Flansche (18) an der Innenrahmenkontur (25) umfasst, und
wobei der Schritt des Formens des einzelnen flachen Vorformlings (14) aus geschichteten Lagen ein Pressformen des flachen Vorformlings (14), um die Flansche (15, 17, 18) der Außen- und Innenkonturen (24, 25) zur Bildung des Rippenvorformlings umzufalten, und ein Aushärten des Rippenvorformlings umfasst.

2. Verbundrippe nach Anspruch 1, wobei die Flansche (15) der Außenkontur (24) so angeordnet sind, dass die Rippe (22) eine flache, C-förmige oder I-förmige Querschnittsform hat.

3. Verbundrippe nach Anspruch 1, wobei die Flansche (17) an gegenüberliegenden Seiten der Strebe (16) einzelne gerade Segmente sind.

4. Verbundrippe nach Anspruch 1, wobei die Flansche (17) an gegenüberliegenden Seiten der Strebe (16) ein Teil eines durchgängigen Flanschs sind.

5. Verfahren zur Herstellung der Verbundrippe (22) für einen Torsionskasten, die in den vorstehenden Ansprüchen 1 bis 4 definiert ist, wobei das Verfahren die Schritte:
Schichten einer Vielzahl von Lagen von Verbundmaterial zum Formen eines im Wesentlichen flachen Stapels (14) von Lagen,
Schneiden des Stapels von Lagen (14), um einen flachen Vorformling zu bilden, der eine Außenkontur (24), die Flansche (15) ausbildet, und eine Innenkontur (25) in dem durch die Außenkontur (24) festgelegten Bereich hat, wobei die Innenkontur (25) zwei oder mehr Streben (16) und Flansche (17) an gegenüberliegenden Seiten der Strebe ausbildet,
Pressformen des flachen Vorformlings (16), um die Flansche (15, 18) der Außen- und Innenkonturen (24, 25) zum Formen des Rippenvorformlings umzufalten, und
Aushärten des Rippenvorformlings umfasst.

6. Verfahren nach Anspruch 5, wobei die Innenkontur (25) zickzackmusterbildende diagonale Streben (16) und Öffnungen (20) in dem flachen Vorformling ausbildet, mit Flanschen an den Seiten einer jeden Öffnung (20).

7. Verfahren nach Anspruch 5, wobei die Öffnungen (20) dreieckig oder kreisförmig sind.

8. Verfahren nach Anspruch 5 oder 6, wobei die Außenkontur (24) grundsätzlich rechteckig ist, mit zwei langen gegenüberliegenden Seiten und zwei kurzen gegenüberliegenden Seiten, und wobei die Flansche (15) in Richtung auf die gleiche Seite der Rippe umgefaltet sind, sodass die Rippe eine C-förmige Querschnittsform hat.

9. Verfahren nach einem der Ansprüche 5 bis 8, wobei Lagen Trockenlagen sind und der Rippenvorformling in einem Resin-Transfer-Molding-Prozess (RTM) ausgehärtet wird.

10. Verfahren nach einem der Ansprüche 5 bis 8, wobei die Lagen Harzvorimprägnierte Lagen sind.

11. Verfahren nach Anspruch 5, das ferner den Schritt des Formens zweier symmetrischer C-förmiger Rippenvorformlinge, des Zusammenstellens der zwei C-förmigen Rippenvorformlinge, um einen I-förmigen Rippenvorformling zu formen, und des gemeinsamen Aushärtens der zwei C-förmigen Rippenvorformlinge umfasst.

## Revendications

1. Nervure composite (22) pour un caisson de torsion, dans laquelle la nervure (22) a été obtenue en tant que corps unitaire par conformation d'une préforme plate unique (14) de plis empilés
dans laquelle la nervure (22) comprend un cadre extérieur (23) de configuration sensiblement rectangulaire ayant un contour de cadre extérieur (24) et un contour de cadre intérieur (25), le contour de cadre extérieur (24) ayant des brides (15),
**caractérisée en ce que** la nervure (22) comprend en outre une pluralité de treillis diagonaux (16) formant un motif en zigzag à l'intérieur de la zone définie par le contour de cadre intérieur (25), la nervure (22) comprenant en outre des brides (17) au niveau de côtés opposés du treillis (16), et des brides (18) au niveau du contour de cadre intérieur (25),
et dans laquelle l'étape de conformation de la préforme plate unique (14) de plis empilés comprend le préformage de la préforme plate (14) pour plier les brides (15, 17, 18) des contours extérieurs et intérieurs (24, 25) pour former la préforme de nervure, et le durcissement de la préforme de nervure.

2. Nervure composite selon la revendication 1 dans laquelle les brides (15) du contour extérieur (24) sont agencées de sorte que la nervure (22) a une forme de section transversale en forme de I, ou en forme de C, plate.

3. Nervure composite selon la revendication 1, dans laquelle les brides (17) au niveau de côtés opposés du treillis (16), sont des segments rectilignes individuels.

4. Nervure composite selon la revendication 1, dans laquelle les brides (17) au niveau de côtés opposés du treillis (16) font partie d'une bride continue.

5. Procédé de fabrication de la nervure composite (22) pour un caisson de torsion selon les revendications précédentes 1 à 4, le procédé comprenant les étapes de :
pose d'une pluralité de plis de matériau composite pour former une pile sensiblement plate (14) de plis,
coupe de la pile de plis (14) pour former une préforme plate ayant un contour extérieur (24) configurant des brides (15), et un contour intérieur (25) à l'intérieur de la zone définie par le contour extérieur (24), le contour intérieur (25) configurant deux ou plusieurs treillis (16), et des brides (17) au niveau de côtés opposés du treillis (16),
préformage de la préforme plate (16) pour plier les brides (15, 18) des contours extérieur et intérieur (24, 25) pour former une préforme de nervure,
et durcissement de la préforme de nervure.

6. Procédé selon la revendication 5 dans lequel le contour intérieur (25) configure un treillis diagonal (16) formant un motif en zigzag, et des ouvertures (20) dans la préforme plate avec des brides dans les côtés de chaque ouverture (20).

7. Procédé selon la revendication 5 dans lequel les ouvertures (20) sont triangulaires ou circulaires.

8. Procédé selon la revendication 5 ou 6 dans lequel le contour extérieur (24) est généralement rectangulaire ayant deux grands côtés opposés et deux petits côtés opposés, et dans lequel les brides (15) sont pliées vers le même côté de la nervure de sorte que la nervure a une forme de section transversale en forme de C.

9. Procédé selon l'une quelconque des revendications 5 à 8, dans lequel les plis sont des plis secs et la préforme de nervure est durcie dans un processus de moulage par transfert de résine (RTM).

10. Procédé selon l'une quelconque des revendications 5 à 8, dans lequel les plis sont des plis pré-imprégnés de résine.

11. Procédé selon la revendication 5 comprenant en outre l'étape de formation de deux préformes de nervure en forme de C symétriques, d'agencement conjoint des deux préformes de nervure en forme de C de façon à former des préformes de nervure en forme de I, et durcissement conjoint des deux préformes de nervure en forme de C.
